# EUROPÄISCHE PATENTSCHRIFT

(11) **EP 0 601 678 B1**
(45) Veröffentlichungstag und Bekanntmachung des Hinweises auf die Patenterteilung: **10.06.1998**
(21) Anmeldenummer: 93250331.1
(22) Anmeldetag: 02.12.1993
(51) Int. Cl.: G08B 13/24, G01S 7/02

(54) **Elektronisches Überwachungssystem**
Electronic monitoring system
Système de surveillance électronique

(30) Priorität: 04.12.1992 DE 4241648
(43) Veröffentlichungstag der Anmeldung: 15.06.1994
(73) Patentinhaber: BORUS SPEZIALVERFAHREN UND- GERÄTE IM SONDERMASCHINENBAU GmbH, D-12459 Berlin (DE)
(72) Erfinder: Hablov, Dimitri Vladimivovich, 119034 Moskau (RU); Fisun, Oleg Ivanovich, 119034 Moskau (RU); Lupichev, Lev Nikolaevich, 119034 Moskau (RU); Osipov, Viktor Vrastislavovich, 119034 Moskau (RU); Schestiperov, Viktor Alexandrovich, 119034 Moskau (RU); Schimko, Richard, D-10179 Berlin (DE)
(74) Vertreter: Christiansen, Henning, Dipl.-Ing.

(56) Entgegenhaltungen:
- EP-A- 0 058 032
- EP-A- 0 490 713
- WO-A-89/11710
- DE-A- 3 200 147
- FR-A- 2 645 307
- GB-A- 2 184 627
- US-A- 4 400 700
- US-A- 4 420 238
- US-A- 4 484 193
- US-A- 5 150 099
- IEEE TRANSACTIONS ON BIOMEDICAL ENGINEERING, Bd.BME-33, Nr.7, Juli 1986, US Seiten 697 - 701 KUN-MU CHEN ET AL 'An X-band microwave life-detection system'

## Beschreibung

Die Erfindung betrifft ein elektronisches Überwachungssystem der im Oberbegriff des Anspruchs 1 angegebenen Art.

Es ist bekannt, Gebäude oder Gelände mit elektronischen Mitteln derart zu überwachen, daß das Betreten durch bzw. die Anwesenheit von Personen zur partiellen Ausblendung oder Reflexion eines wellenfeldes führt, dem das Gebäude oder Gelände ausgesetzt ist, wodurch ein Nachweissignal erzeugt wird und letztlich ein Alarm ausgelöst werden kann.

Als Nachweisfelder werden insbesondere mechanische (z.B. Ultraschall-) oder elektromagnetische Wellenfelder unterschiedlicher Frequenz genutzt.

Es ist weiter bekannt, das von einer Person ausgehende Wellenfeld in analoger weise als Nachweisfeld zu nutzen. In DE 38 32 428 A1 ist beispielsweise ein solches elektronische Überwachungssystem auf der Grundlage der von Personen ausgehenden Infrarotstrahlung beschrieben.

Schließlich ist auch die Nutzung von Mikrowellenstrahlung zur Bewegungsdetektion in offenem Gelände oder innerhalb von Räumen bekannt, die auf der Modulation eines Mikrowellenstrahles durch sich im der Strahlung ausgesetzten Bereich bewegende Objekte beruht.

Ein entsprechendes elektronisches Überwachungssystem oder Verfahren weist die Merkmale des Oberbegriffs des Anspruchs 1 auf.

Die genannten Verfahren ermöglichen normalerweise, sofern sie ohne zusätzliche optische Aufnahmeeinrichtungen auskommen müssen, keine Unterscheidung zwischen sich befugt und unbefugt in einem zu überwachenden Bereich aufhaltenden Personen, sind daher zur Überwachung von Bereichen - insbes. nicht einsehbaren Gebäuden - , in denen sich befugte und unbefugte Personen aufhalten können, nur bedingt oder gar nicht geeignet.

Es sind weiter Suchvorrichtungen bekannt, die mit Mikrowellen arbeiten und zum Auffinden von durch Erdbeben oder Lawinen von der Außenwelt abgeschnittenen Personen eingesetzt werden.

Die Verwendung von Mikrowellen zum Auffinden verschütteter Personen basiert auf dem Umstand, daß Mikrowellen zum Teil in der Lage sind, Schutt- und Geröllmaterialien zu durchdringen. Außerdem weisen Mikrowellen die Eigenschaft auf, daß sie bei Reflexion an einem lebenden Organismus einer Veränderung unterworfen werden, während der Wellenanteil, der von der Umgebung des lebenden Organismus reflektiert wird, keine Modulation aufweist.

Aus K. Chen et al. "An X-band microwave life-detection system", IEEE Transactions on biomedical engineering, Vol. BME 33, No. 7, July 1986 ist ein derartiger mit Mikrowellen arbeitender Lebensindikator bekannt, dessen Abtastsignale mit einer Frequenz von 10 GHz, durch eine Richtantenne gebündelt, in den zu untersuchenden Bereich gestrahlt werden.

Das von dem abgetasteten Bereich reflektierte Signal weist, wenn sich darin ein lebender Mensch befindet, einen unmodulierten und einen durch die Körperfunktionen, speziell Atmung und Herzschlag, des von der Außenwelt abgeschnittenen Menschen modulierten Anteil auf. Durch eine in Phase und Dämpfungsmaß regelbare Kompensationsschleife wird der nichtmodulierte Anteil des reflektierten Signals gelöscht.

Die Kompensationsschleife besteht aus einem dem Mikrowellenoszillator und -verstärker des Mikrowellensenders nachgeordneten Richtungskoppler, in dem ein Teil der Sendeleistung abgezweigt wird, einem regelbaren Dämpfungsglied, einem diesem nachgeschalteten Phasenschieber und einem weiteren Richtungskoppler, durch den der abgezweigte Teil des Sendesignals dem Empfangssignal wieder zugemischt wird. Dämpfungsglied und Phasenschieber werden so eingestellt, daß der nichtmodulierte Signalanteil des Empfangssignals gelöscht wird. Bei anderen Ausführungen der Erfindung kann die Elimination des unmodulierten Anteils im Empfangssignal, der dem Sendesignal entspricht auch durch Filterung durchgeführt werden. Hierbei können insbesondere auch Korrelationsverfahren verwendet werden, welche das unmodulierte Signal aufgrund von Ähnlichkeitskriterien erkennen und eliminieren.

Der Informationsinhalt des modulierten Anteils des reflektierten Signals wird also durch Vergleich mit dem ausgesandten (Abtast-)Signal selektiert.

In der genannten Druckschrift wird auch eine zur berührungslosen Patientenüberwachung geeignete Abwandlung des Verfahrens beschrieben, die ohne Richtantenne und mit 0,1 mW Ausgangsleistung auskommt.

Die zum Auffinden von verunfallten Personen benutzten und mit Mikrowellen arbeitenden bekannten Verfahren und Geräte sind jedoch für eine präventive Überwachung von Gebäuden nur bedingt geeignet.

Dies liegt grundsätzlich darin begründet, daß in solchen Gebäuden vielfach (befugte) Personen oder auch Haustiere anwesend sind, deren Körper Mikrowellenstrahlung reflektiert, wobei Pulsfrequenz und Atmung modulierte Mikrowellen-Reflexionssignale erzeugen, die einerseits nicht zur Auslösung eines Alarms führen dürfen und andererseits - insbesondere, wenn sich relativ viele befugte Personen im fraglichen Bereich aufhalten - die von unbefugten Personen herrührenden zusätzlichen Signale überdecken werden. Durch Elimination bekannter Signalmuster können allgemein die Signalmuster von Lebewesen, denen bei der Suche keine besondere Aufmerksamkeit zuteil werden soll, von der Anzeige ausgeschlossen werden.

Der Erfindung liegt die Aufgabe zugrunde, ein elektronisches Überwachungssystem der eingangs genannten Gattung zu schaffen, durch das der Aufenthalt von unbekannten Personen in einem überwachten Bereich - insbesondere Gebäude -, der auch von befugten Personen und/oder Tieren genutzt wird, festgestellt werden kann.

Ein vorteilhafter Anwendungsbereich besteht in der Erhöhung der Genauigkeit bei der Detektion von Lebewesen, vorzugsweise Personen, die sich unbefugt in Gebäuden befinden, welche durch einen mobilen Sicherheitsdienst kontrolliert werden.

Diese Aufgabe wird durch ein elektronisches Überwachungssystem mit den Merkmalen des Anspruchs 1 gelöst.

Die Erfindung schließt die Erkenntnis ein, daß Eindringlinge mittels eines elektronischen Überwachungssystems der gattungsgemäßen Art grundsätzlich festgestellt werden können, wenn das genutzte Nachweisprinzip zunächst eine Unterscheidung von verschiedenen sich im fraglichen Bereich aufhaltenden Lebewesen bietet.

Die Erfindung ermöglicht weiterhin in vorteilhafter Weise, daß bei einem Überwachungsvorgang dann ein Alarm ausgelöst werden kann, wenn ein Vergleich der erfaßten Signale mit vorgegebenen Vergleichswerten, welche den zu erfassenden Signalen im ungestörten Fall entsprechen, wenn sich also keine oder nur befugte Personen im zu schützenden Objekt aufhalten, eine Nichtübereinstimmung ergibt.

Weiterhin ist günstig, wenn jeder sich in einem zu überwachenden Bereich - insbesondere nicht (vollständig) einsehbaren Gebäude - befindende Mensch bzw. jedes größere Tier durch seine Atmung und Herzfunktion und weitere Körperfunktionen ein charakteristisches mechanisches Schwingungsspektrum aufweist, das ihn/es - hinreichend genaue Analyse vorausgesetzt - in Art eines Fingerabdrucks unverwechselbar charakterisiert. Damit ist die oben angesprochene Unterscheidung aufgrund dieses Schwingungsspektrums möglich.

Ein selektiv arbeitendes elektronisches Überwachungssystem (insbes. zum Gebäudeschutz vor unbefugter Benutzung) kann also realisiert werden, wenn von den zu überwachenden Gebäuden ein früher mittels Mikrowellen erstelltes Signalbild, das den Normalzustand (oder Muster-)zustand des Gebäudes hinsichtlich des Vorhandenseins von Personen oder anderen Lebewesen repräsentiert, mit einem von Sicherheitskräften ermittelten oder einem in sonstiger weise aufgenommenen Signalbild verglichen wird. Ein vorab geeignet festzulegendes Maß der Abweichung zwischen den beiden Signalbildern aufgrund der Anwesenheit zusätzlicher und zum Überwachungszeitpunkt unbefugt in dem Gebäude befindlicher Personen ist Kriterium zur Auslösung eines Alarms bzw. für die Einleitung entsprechender Sicherungsmaßnahmen.

Die Ausführung eines solchen Vergleichs wird erleichtert oder unter ungünstigen Bedingungen erst ermöglicht, wenn die Empfangsschaltung so ausgebildet ist, daß sie eine Messung auch bei kleinsten Signal-Rausch-Verhältnissen sowie ohne Übersteuerungen ermöglicht, um eine unverfälschte Erfassung der Modulations- (d.h. damit der zugrundeliegenden Körperschwingungs-)Frequenzen zu gewährleisten. Zu diesem Zweck ist vorteilhafterweise eine automatische Empfindlichkeitsregelung vorgesehen.

Für die Durchführung des Datenvergleichs ist es von besonderem Vorteil, wenn die ermittelten, im Zeitbereich erfaßten Signale eine Frequenzanalyse, insbesondere in Form einer schnellen Fourier-Transformation (FFT), unterzogen werden. Die FFT-aufbereiteten Signale repräsentieren dabei jeweils ein Frequenzspektrum.

Die Genauigkeit der Detektion wird in vorteilhafter weise dadurch erhöht, daß die Abtastung eines zu überwachenden Gebäudes durch Scannen im Sinne eines räumlichen Abtastens mit einem stark gebündelten Mikrowellen-Strahl mittels einer entsprechend ausgebildeten Richtantenne mit veränderlicher Ausrichtung erfolgt. Die Veränderung der Ausrichtung der Antenne wird dabei vorzugsweise elektrisch vorgenommen.

Nach einer bevorzugten Ausführung der Erfindung weist das elektronische Überwachungssystem für die mobile Überwachung von einer Mehrzahl von Gebäuden zwecks Feststellung von Personen, die eines oder mehrere dieser Gebäude unbefugt betreten haben, erste und zweite Speichervorrichtungen, deren Speicheradressen Z₁ bis Zₙ den einzelnen zu überwachenden Gebäuden zugeordnet sind und deren Speicherinhalt aus Signalmengen zu gebäudespezifischen Merkmalen für die Vergleichs- bzw. Normalsituation, objektbezogenen Sicherheitsmaßnahmen für den Fall einer unbefugten Benutzung eines Gebäudes, zeitlich variablen Belegungs- und Benutzungskriterien, Positionsdaten der Gebäude in dem jeweiligen Gelände sowie des Standpunkts eines Fahrzeugs zur Durchführung der mobilen Überwachnug und gebäudespezifischen Zusatzinformationen besteht, auf.

Die von dem mobilen Detektor des Überwachungssystem aufgenommenen, aus einem Gebäude reflektierten Mikrowellen werden nach Kompensation ihres unmodulierten Anteils und automatischer Pegeleinstellung einer schnellen Fourier-Transformation unterzogen und dann mit den in der Speichervorrichtung vorhandenen, dem gleichen Gebäude bzw. Gebäude-oder Geländeabschnitt zugeordneten Signalmengen verglichen.

In der Signalverarbeitungseinheit ist eine Einrichtung zur wahlweisen Akkumulation mehrerer Meßsignale vorgesehen, die in Betrieb gesetzt wird, falls das Signal-Rausch-Verhältnis einer Einzelmessung zur Gewinnung einer Fourier-Transformierten, die bezüglich des Rauschens mit der gespeicherten vergleichbar ist, nicht ausreicht.

Die Speichervorrichtungen sind zyklisch durch einen Multiplexer ansteuerbar ausgebildet. Die Inbetriebnahme der Sende- und Empfangs-Einrichtungen und das Auslesen der gebäudespezifischen Signalmengen aus den Speichervorrichtungen des Überwachungssystem erfolgt immer dann, wenn das für die mobile Überwachung eingesetzte Fahrzeug einen festgelegten und durch ein gesondertes Kontrollsystem überprüften Standort eingenommen hat.

Zur Auslösung einen Alarms wegen unbefugt in einem Gebäude vorhandener Personen ist es erforderlich, daß die Abweichung der gespeicherten (Muster-)Signalmengen von den detektierten (Ist-)Signalmengen vorgegebenen Kriterien genügt bzw. - vereinfacht - einen bestimmten Betrag überschreitet. Eine in vorteilhafter weise nach einem Korrelations-Verfahren arbeitende Vergleichereinheit und eine geeignet dimensionierte Schwellwert-Stufe bewirken bei entsprechender Signalmengen-Abweichung die erforderliche Alarm-Auslösung, etwa auf einer Anzeigeeinrichtung. Für das Auslesen der Signaldaten, insbesondere der Positionsdaten für die einzelnen Gebäude aus der zweiten Speichervorrichtung ist ein Multiplexer vorgesehen, der von einem Zufallsgenerator angesteuert wird. Dadurch ist in vorteilhafter weise eine Manipulation der Reihenfolge der Überwachung der einzelnen Objekte - und damit der Gestaltung einer Kontrollfahrt - vermeidbar und führt zu einer Erhöhung der wirksamkeit der Überwachungsmaßnahmen.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Figur 1a: ein Blockschaltbild einer bevorzugten Ausführungsform der Erfindung in schematisierter Darstellung,
- Figur 1b: die schematisierte Darstellung der in Figur 1a gezeigten Mikrowellensende-/-empfangsvorrichtung,
- Figur 1c: die schematisierte Darstellung der in Figur 1b gezeigten Signalverarbeitungsvorrichtung,
- Figur 2: die schematisierte Darstellung eines Details der in Figur 1 gezeigten Ausführungsform der Erfindung,
- Figur 3: die schematisierte Darstellung eines ersten Signalspeichers der Ausführungsform,
- Figur 4: die schematisierte Darstellung eines zweiten Signalspeichers der Ausführungsform,
- Figur 5: eine vorteilhafte Ausführung der Anzeigeeinrichtung entsprechend der Ausführungsform sowie
- Figur 6: eine Darstellung von detektierten Signaldaten, die aufgrund der Modulation reflektierter Mikrowellen-Anteile zum Nachweis von Personen oder Haustieren dienen.

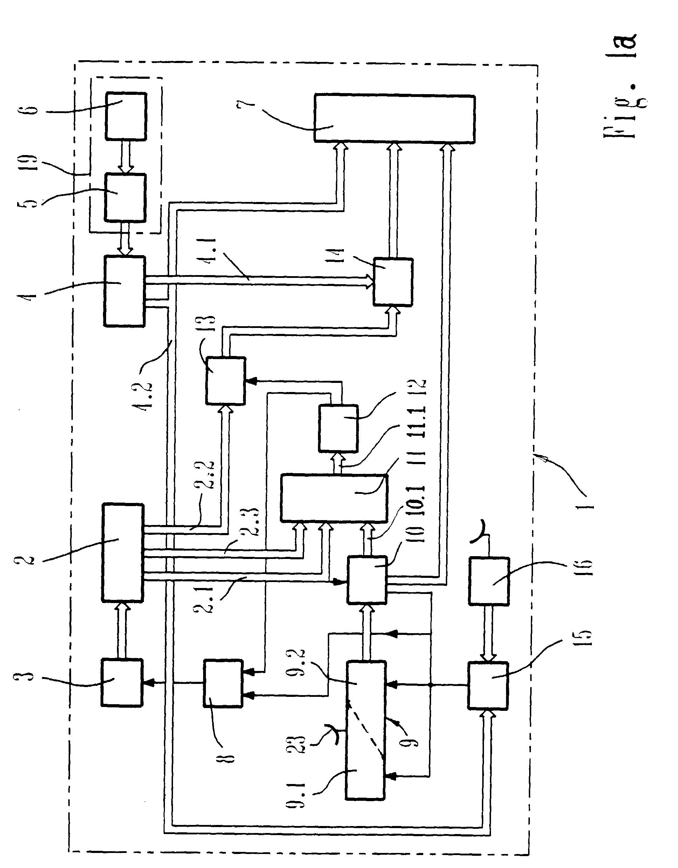

In Figur 1a ist ein Blockschaltbild eines Ausführungsbeispiels des elektronischen Überwachungssystems in schematisierter Form dargestellt, dessen wesentlichste Elemente eine Mikrowellensende-/-empfangsvorrichtung 9 mit einem Sender 9.1 und einem Empfänger 9.2, eine erste und eine zweite Speichervorrichtung 2 und 4, in denen die wichtigsten überwachungsspezifischen Datenmengen einzelner zu überwachender Gebäude gespeichert sind, und eine Vergleichereinheit 11 sind.

Der Sender 9.1 strahlt mittels einer Antenne 23 ein Überwachungssignal in den zu überwachenden Bereich, das dort teilweise reflektiert als Empfangssignal über die Antenne 23 dem Empfänger 9.2 zugeführt wird. Von dort gelangt es zu einer Aufbereitungseinheit, die daraus eine Ist-Signalmenge 10.1 gewinnt.

Die erste Speichervorrichtung 2 gibt Signalmengen 2.1 und 2.3 (Gebäudemerkmale unter Normalbedingungen und aktuelle Belegungskriterien für ein bestimmtes Gebäude Zₓ) an die Vergleichereinheit 11, der auch die Ist-Signalmenge 10.1 zugeleitet wird.

Die Vergleichereinheit ist so ausgebildet, daß sie einen Vergleich der Muster-Signalmengen mit der zugehörigen Ist-Signalmenge nach einem Korrelations-Verfahren anhand von aus den Signalmengen durch schnelle Fourier-Transformation gebildeten Frequenzspektren ausführt.

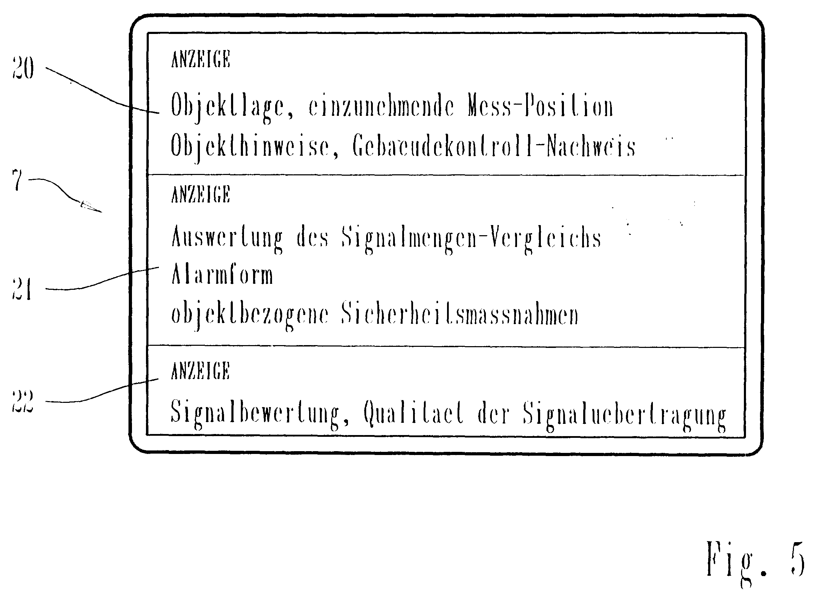

Das Vergleichsergebnis wird einem Schwellwert-Schalter 12 zugeführt. Die Überschreitung eines vorab zur Vermeidung von meßfehlerbedingtem Fehlalarm vorgegebenen Grades an zulässiger Abweichung zwischen den das zu überwachende Gebäude charakterisierenden Muster-und Ist-Signalmengen führt zur Aktivierung der Schaltstufe 13, von der über eine Summierschaltung 14 die Signalmengen 2.2 (objektbezogene Sicherheitsmaßnahmen aus der ersten Speichervorrichtung 2) und 4.1 (gebäudespezifische Zusatzinformationen aus der zweiten Speichervorrichtung 4) an die Alarmierungsvorrichtung bzw. Anzeigeeinheit 7 gelangen, wo eine Alarm-Auslösung unter gleichzeitiger Darstellung aller für den Diensttuenden relevanten Informationen (vgl. die Beschreibung zu Fig. 5) erfolgt.

Das Auslesen der Signalmengen aus den einzelnen Gebäuden Z₁ bis Zₙ zugeordneten Speicheradressen erfolgt aus beiden Speichervorrichtungen 2 und 4 jeweils durch eine externe Steuerung 3 bzw 19.

Die Steuerung 19 für die Speichervorrichtung 4 mit den Signalmengen 4.2 (Positionsdaten der zu überwachenden Gebäude) besteht aus einem zyklischen Multiplexer 5 und einem diesen ansteuernden Zufallsgenerator 6. Die Auswahl des ersten und der anschließend zu kontrollierenden Gebäude(s) erfolgt dadurch zufällig und in vorteilhafter weise manipulationssicher.

Die Positionsdaten 4.2 werden auf der Anzeige-Einheit 7 zur Anzeige gebracht und gleichzeitig einer weiteren Vergleichereinheit 15 zugeführt, die mittels eines Navigations-Systems 16 der mobilen, in einem Fahrzeug installierten Mikrowellensende/Empfangs-Einrichtung den für die spezielle Überwachungsaufgabe vorgegebenen Standort zuweist.

Ist dieser Standort eingenommen, werden der Sender 9.1 und der Empfänger 9.2 eingeschaltet. Das Standort-Vergleichsergebnis wird gleichzeitig einer Torschaltung 8 zugeführt, die außerdem mit der Vergleichereinheit 11 verbunden ist. Werden durch die Vergleichereinheit die Erkennungs-Signalmengen des betreffenden Gebäudes verifiziert und ist die Mikrowellensende-/empfangseinrichtung 9 in Betrieb, so wird der zyklische Multiplexer 3 genau an der Speicheradresse Zₓ gestoppt, die dem gerade untersuchten Gebäude entspricht.

Damit kann bei einem bestimmten Grad der Abweichung zwischen den Muster-Signalmengen 2.1, 2.3 und der Ist-Signalmenge 10.1 zwecks Ausgabe einer Alarminformation die Signalmengen 2.2 (Sicherheitsmaßnahmen bei Feststellen unbefugter Benutzung des Gebäudes) zusammen mit den Positionsdaten und gebäudespezifischen Zusatzinformationen auf der Anzeige- bzw. Alarmierungsvorrichtung 7 dargestellt werden.

Praktische Ergebnisse haben gezeigt, daß überraschend in einem Frequenzbereich von 1,3 bis 1,6 GHz die zur Messung von Körpersignalen durch bauliche Umhüllungen hindurch erforderliche Mikrowellenleistung besonders gering ist, so daß sich dieser Frequenzbereich für ein Überwachungssystem besonders gut eignet.

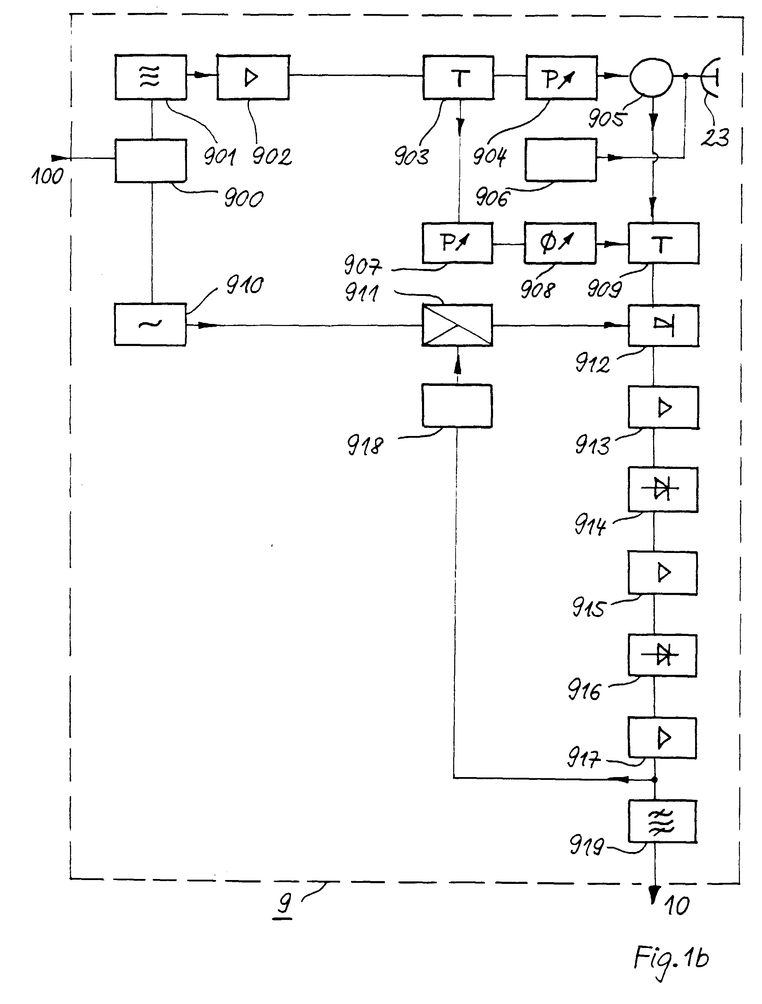

Figur 1b zeigt die Ausführung der Mikrowellensende-/-empfangseinrichtung 9 in detaillierter Form.

Die Einrichtung 9 wird durch eine Steuerung 900 gesteuert. Ein Mikrowellengenerator 901 gibt auf entsprechenden Befehl der Steuerung 900 ein Mikrowellensignal mit einer Leistung von 20 mW aus, das einem Verstärker 902 zugeführt wird, der es auf eine Leistung von 200 mW verstärkt. Dessen Ausgang ist mit einem Richtungs- bzw. Spannungskoppler 903 verbunden, der einen Teil der Signalleistung abzweigt, während der Hauptteil über eine Leistungssteuerstufe 904 einem Zirkulator 905 und von diesem einer kombinierten Sende-/Empfangsantenne 23 zugeführt wird, über die die Mikrowellen in den zu überwachenden Bereich eingestrahlt werden.

Die Antenne weist eine ausgeprägte Richtcharakteristik auf und wird - in Abhängigkeit von der Größe des Bereiches und dem Abstand des Meßfahrzeuges zu diesem - mit einer an sich bekannten Antennensteuerung 906 schrittweise über einen zu überwachenden Raumbereich geführt.

Die erforderlichen Daten werden der Antennensteuerung von der Vergleichereinheit 15 zugeführt, die sie auf die oben beschriebene Weise erhält.

Die aus dem zu überwachenden Bereich reflektierten Mikrowellensignale werden von der Antenne 23 empfangen und zum Richtungs- bzw. Spannungskoppler 909 geleitet, wo dem Empfangssignal der im Richtungskoppler 903 entnommene und im Dämpfungsglied 907 sowie dem regelbaren Phasenschieber 908 in Amplitude und Phase so justierte Anteil des Sendesignals hinzugefügt wird, daß sich der unmodulierte Anteil des Empfangssignals und das abgezweigte Sendesignal auslöschen, so daß für die weitere Signalverarbeitung nur der modulierte Anteil des Empfangssignals erhalten bleibt.

Dieses Signal wird einem Modulator 912 zugeführt, wo es mit einer durch einen ebenfalls über die Steuerung 900 gesteuerten Tonfrequenzgenerator 910 erzeugten und über eine Addierstufe 911, deren Funktion weiter unten erläutert wird, zugeführten Modulationsspannung moduliert wird.

Über einen Mikrowellen-Vorverstärker 913, einen Demodulator 914, einen Schmalband-Verstärker 915, einen Gleichrichter 916 und einen NF-Verstärker 917 gelangt das Signal zu einem Verzweigungspunkt, von dem aus es einerseits über ein Bandfilter 919 schließlich der Signalverarbeitungseinheit 10, zum anderen über eine automatische Verstärkungsregelschaltung 918 herkömmlicher Art der Addierstufe 911 zugeführt wird. Dort wird es der Modulationsspannung aufgeprägt, die dann dem Modulator 912 zugeführt wird.

Die zusätzliche Modulation des modulierten Anteils des Mikrowellen-Empfangssignals mit einer in ihrer Amplitude durch Rückkopplung aus dem Signal selbst gewonnenen Tonfrequenzspannung dient der automatischen Gewährleistung eines optimalen Arbeitsbereiches der Stufen 913 bis 919 und damit der Verbesserung des Signal-Rausch-Verhältnisses und der Verhinderung von Übersteuerungen im Signalaufbereitungsweg, die die gemessenen Frequenzspektren verfälschen und sich damit verheerend auf die Aussagefähigkeit der nachfolgend gewonnenen Ist-Signale auswirken würden.

Figur 1c zeigt einen schematisierten Aufbau der Signalverarbeitungseinheit 10 in näheren Einzelheiten. Die Einheit 10 wird durch eine Steuerung (CPU) 100 gesteuert, die außerdem die Steuerung 900 der Sende-/Empfangseinrichtung 9 steuert.

Das Signal vom Bandfilter 919 gelangt zu einem Spektrenanalysator 101 mit Prozeßrechner-Aufbau bzw. -Software, der auf bekannte Weise eine schnelle Fourier-Transformation des Signals zur Überführung vom Zeit- in den Frequenzbereich ausführt. Das transformierte Signal wird gleichzeitig in einem RAM 102 gespeichert, einem Display 104 zur visuellen Darstellung für den Bediener und einem Vergleicher 103 zugeführt.

Der Vergleicher 103 erhält außerdem von einem Eichsignalgeber ein Signal 105, dessen Signal-Rausch- Verhältnis einem für eine korrekte weiterverarbeitung im Vergleicher 11 erforderlichen Wert entspricht. Dieses Signal wird z. B. aus in der Speichervorrichtung 2 gespeicherten Muster-Signalen 2.3 gewonnen.

Ist das Signal-Rausch-Verhältnis des Meßsignals kleiner als das des Eichsignals bzw. als ein vorgegebener Mindestwert, so gibt der Vergleicher ein diesen Umstand kennzeichnendes Signal an die CPU aus, die daraufhin die Steuerung 900 der Sende-/Empfangseinrichtung anweist, einen weiteren Meßvorgang auszuführen. Das in dessen Ergebnis erhaltene Meßsignal gelangt wiederum in den Spektrenanalysator 101, den Speicher 102 (wo es an einem anderen Speicherplatz abgelegt wird als das erste Meßsignal) und das Display 104. Es gelangt jedoch auf Veranlassung der CPU 100 nicht direkt zum Vergleicher 103, sondern wird gemeinsam mit dem ersten Meßsignal aus dem Speicher 102 einem an sich bekannten Spektren-Akkumulator 106 zugeführt, wo es mit dem ersten Meßsignal überlagert und dadurch das Signal-Rausch-Verhältnis verbessert wird. Das im Spektren-Akkumulator 106 gewonnene Spektrum wird dem Vergleicher zugeführt und daraufhin geprüft, ob es das erforderliche Signal-/Rausch-Verhältnis aufweist. Ist dies der Fall, weist die CPU 100 den Vergleicher 100 zur Ausgabe des Spektrums an den Vergleicher 11 und die Steuerung 900 zum Abwarten auf einer neuen Steuerbefehl an. Reicht das Signal-/Rausch-Verhältnis noch nicht aus, so wird die Messung solange wiederholt und das Meßergebnis akkumuliert, bis der benötigte wert erreicht ist oder abgebrochen wird.

Zum Abbruch des Meßvorganges sowie zur Eingabe von die Signalverarbeitung steuernden Befehlen des Bedieners dient eine Eingabevorrichtung 107.

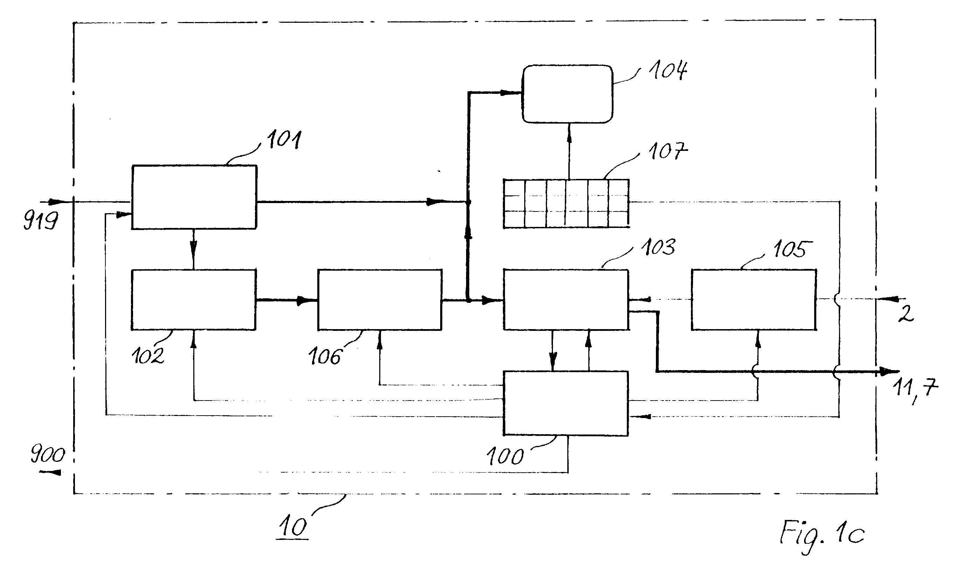

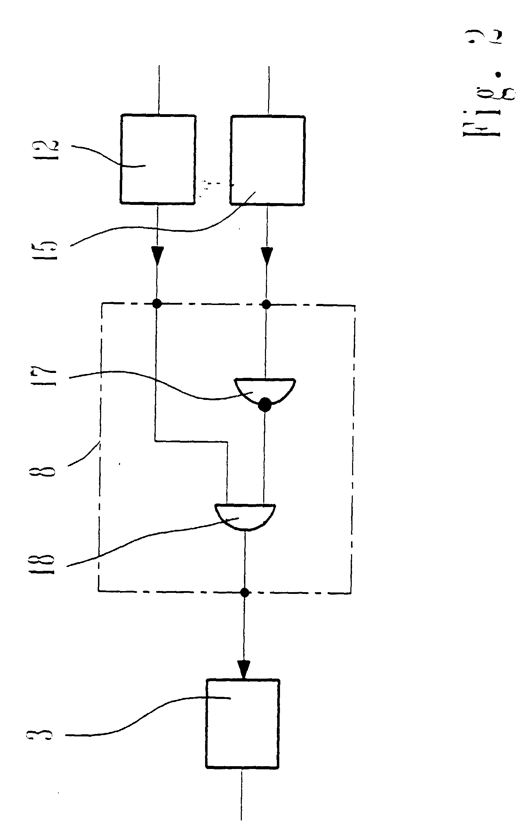

Figur 2 zeigt eine vorteilhafte Ausführungsform der in Figur 1 beschriebenen Torschaltung 8.

Die Torschaltung 8 enthält ein UND-Gatter 18, dessen Eingänge zum einen direkt mit der Schwellwert-Stufe 12 der ersten Vergleichereinheit (Bezugsziffer 11 in Figur 1) und zum anderen über einen Negator 17 mit der Vergleichereinheit 15 für die Kontrolle der Meß-Standorte verbunden sind.

Ist der gebäudespezifisch richtige Standort für die Messung eingenommen, d. h. stimmen Muster- und Ist-Erkennungs-Signalmengen des Gebäudes überein, so schaltet das UND-Gatter 18 durch, und der zyklische Multiplexer 3 stoppt an der dem aktuell zu überwachenden Gebäude zugeordneten Speicherstelle Zₓ der ersten Speichervorrichtung (Bezugsziffer 2 in Figur 1), deren Inhalt zur Anzeige gebracht werden kann.

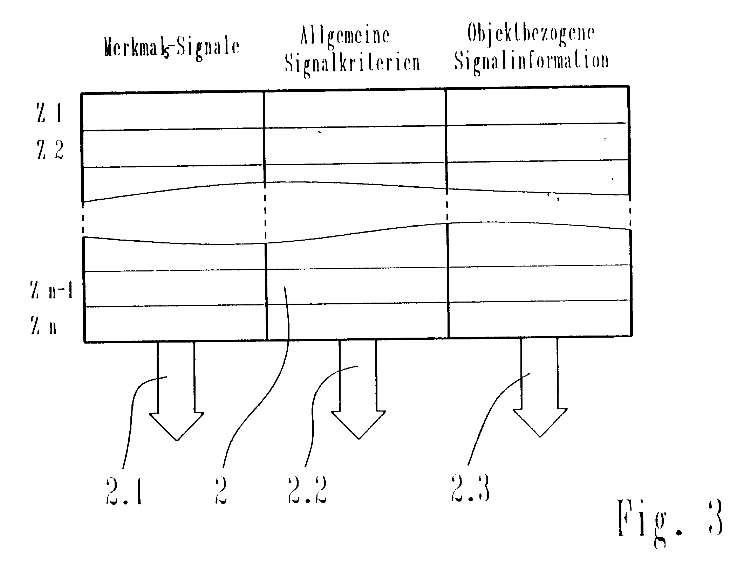

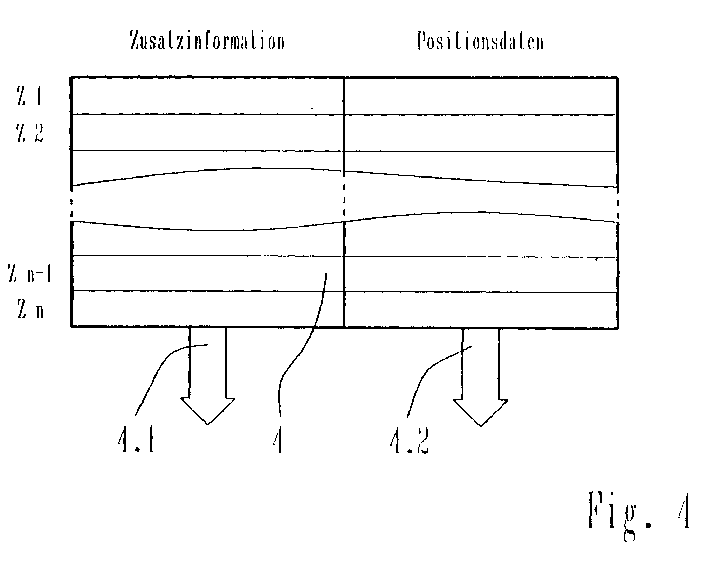

In den Figuren 3 und 4 ist in schematisierter Form der Aufbau der als Matrix-Speicher ausgebildeten ersten und zweiten Speichervorrichtung 2 und 4 dargestellt. Für einen Überwachungsbereich von n Gebäuden enthält jeder der beiden Matrixspeicher n Zeilen, die mit Z₁ bis Zₙ bezeichnet und jeweils einem der Gebäude zugeordnet sind. Die Signalmengen 2.1, 2.2 und 2.3 beziehen sich - in dieser Reihenfolge - auf gebäudespezifische Merkmale (Merkmals-Signale), objektbezogene Sicherheitsmaßnahmen (allgemeine Signalkriterien) und Körperschwingungsspektren aller Personen oder Haustiere, die sich normalerweise in dem Gebäude befinden. Der Matrix-Speicher 4 enthält ebenfalls zeilenweise den einzelnen Gebäuden zugeordnet die Positionsdaten 4.2 sowie Zusatzinformationen 4.1, durch die z. B. Kontrollzeiten vorgegeben werden können.

Eine günstige Form der Darstellung des Überwachungsergebnisses sowie - im Alarmfalle - von Alarminformationen ist in Figur 5 als Display der Anzeige-Einheit 7 dargestellt.

Das Display ist in drei Anzeigebereiche 20, 21, 22 aufgeteilt, in denen jeweils verbale Informationen dargestellt sind. Der obere Bereich 20 ist für eine Anzeige der Gebäudelage und der einzunehmenden Meß-Standorte vorgesehen. Gleichzeitig wird ein Kontrollvermerk über die jeweils durchgeführte Überwachung angezeigt (und gespeichert). Im mittleren Anzeigebereich 21 erscheint im gegebenen Fall im Ergebnis der Auswertung der Muster- mit den Ist-Signalmengen eine Alarmanzeige sowie eine Darstellung relevanter Sicherheitsmaßnahmen, die im Alarmfall unter Beachtung gebäudespezifischer Besonderheiten durchzuführen sind. Das dritte Displayfeld 22 dient der Anzeige der Qualität der Signalübertragung und damit der Information über das Erfordernis, gegebenenfalls eine Wiederholung des Überwachungsvorgangs vorzunehmen.

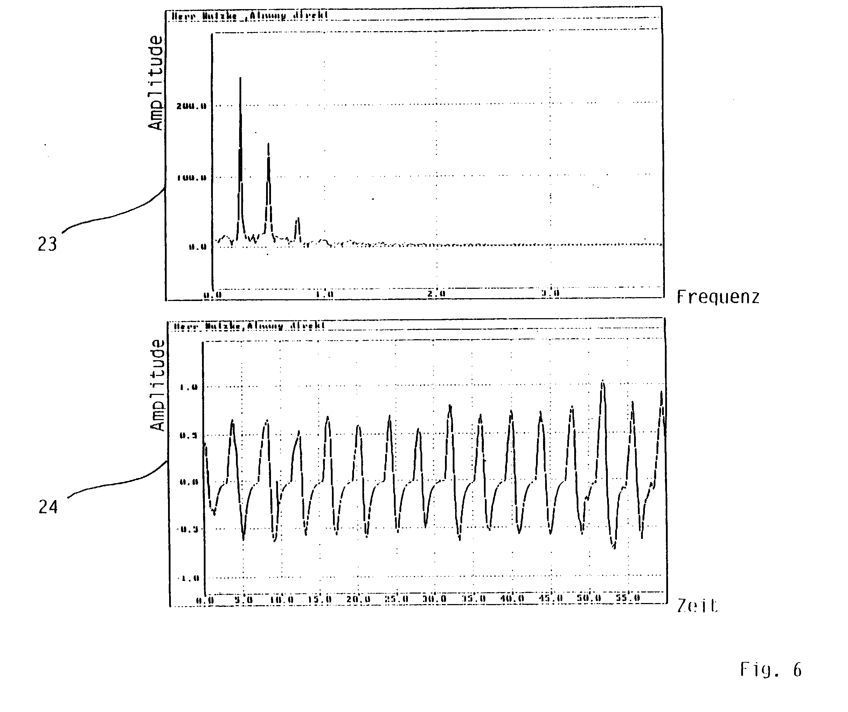

In Figur 6 ist zur Veranschaulichung des Meßprinzips in Diagrammform das Meßergebnis einer direkten Mikrowellen-Detektion der Atmung einer Person dargestellt. Das Amplituden-Zeit-Diagramm 24 zeigt den normalen Atemrythmus einer männlichen Person für den Zeitbereich von einer Minute. Das aus diesem Kurvenverlauf mittels einer Fourier-transformation abgeleitete Frequenzspektrum 23 zeigt im ersten Viertel der dargestellten normierten Frequenzbereichs drei charakteristische Peaks, deren Frequenzlage und Amplitudenwert personenspezifisch sind.

Eine verfeinerte Meßtechnik erlaubt auf dieser Grundlage die Ausfertigung von individuellen, fingerabdruckähnlichen Körperschwingungsbildern, deren charakteristische Merkmale - insbesondere Frequenzanteile aus Oberschwingungen - die Identifizierung einer Person sogar unabhängig von deren aktuellem Atem- und Herzrhythmus erlauben.

Auf dieser Grundlage enthält dann die einer Überwachung zugrundegelegte Muster-Signalmenge die Körperschwingungsbilder aller Personen und/oder Tiere, die sich in einem fraglichen Gebäude oder Gebäudeabschnitt berechtigt aufhalten.

Die Muster-Signalmenge kann im Rahmen einer Referenzmessung, bei der sich alle berechtigten Personen im Gebäude befinden, zusammenhängend bestimmt oder auch aus einzelnen, getrennt aufgenommenen Körperschwingungsspektren berechtigter Personen synthetisiert werden. Treten in der gemessenen Ist-Signalmenge Frequenzbilder auf, die für die befugten Personen atypisch sind, bedeutet dies die Anwesenheit Unbefugter.

Ein meßtechnisch weniger verfeinertes Überwachungssystem im Rahmen der Erfindung umfaßt die Zuweisung eines Kennsignalgebers an jede sich in einem zu überwachenden Abschnitt befugt aufhaltenden Person, ggf. auch an Haustiere. Ein solcher Kennsignalgeber gibt ein mittels der Mikrowellenabtastung des fraglichen Bereiches erfaßbares Kennsignal ab, das zusammen mit den Körperschwingungen der sich befugt in diesem Bereich aufhaltenden Personen und/oder Tiere nachgewiesen wird und diese im Frequenzbild als Befugte kennzeichnet. Tauchen nun im Frequenzbild Anteile ohne Kennsignalzuordnung auf, so sind diese einem Unbefugten zuzuornen und führen zur Auslösung eines Alarms. In einer speziellen Ausgestaltung ist der Kennsignalgeber ein - zweckmäßigerweise in seiner Frequenz veränderbarer - Infraschallsender, der ein charakteristisches Frequenzpeak in der Nähe der Körperschwingungs-Grundfrequenzen liefert, das durch den Mikrowellenempfänger leicht nachweisbar ist.

Bei dieser letzteren Variante brauchen von den befugten Personen und/oder Tieren keine individuellen Körperschwingungsbilder aufgenommen und ausgewertet zu werden, sondern es genügt eine im wesentlichen im Bereich der Grundschwingungen betriebene Meßvorrichtung.

Eine weitere Ausbildung der Erfindung besteht darin, daß das Überwachungssystem nicht mobil, sondern ortsfest installiert ist. Dabei entfallen einige der im obigen Ausführungsbeispiel beschriebenen Funktionsgruppen und Verfahrensschritte, insbesondere die mit der korrekten Lokalisierung des zu überwachenden Gebäudes und des Meßfahrzeuges verbundenen.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht. Insbesondere kann gegebenenfalls dabei auch auf eine Richtantenne und deren Steuerung verzichtet und das Meßsignal über einfache Metallflächen abgestrahlt und aufgenommen werden.

## Patentansprüche

1. Elektronisches Überwachungssystem zur Erfassung von Lebewesen hinter einer wand bzw. in einem Gebäude aufgrund der Reflexion eines in den zu überwachenden räumlichen Bereich eingestrahlten wellenfeldes, mit einer Mikrowellensende-/-empfangseinrichtung (9) zur Erzeugung und Einstrahlung des wellenfeldes bzw. zum Empfang und zur Aufbereitung eines von dem Lebewesen reflektierten Signales und einer Vorrichtung (7) zur Ausgabe eines die Anwesenheit anzeigenden Signals,
**gekennzeichnet durch**
- eine in der Mikrowellensende-/-empfangseinrichtung (9) vorgesehene erste Signalaufbereitungseinrichtung (903 bis 919), zur Elimination des dem Sendesignal entsprechenden bzw. bereits in diesem enthaltenen unmodulierten Anteils im Empfangssignal,
- eine der Mikrowellensende-/-empfangseinrichtung (9) nachgeordnete zweite Signalaufbereitungseinrichtung (10), die das aus dem überwachten Bereich reflektierte, bei Anwesenheit eines Lebewesens in dem Bereich mit deren Körperschwingungen modulierte, und durch die erste Signalaufbereitungseinrichtung (903 bis 919) aufbereitete Mikrowellensignal unter Ausführung einer Frequenz- und/oder Korrelationsanalyse zur Lieferung einer Ist-Signalmenge (10.1) weiter aufbereitet,
- eine erste Speichervorrichtung (2) zur Speicherung und Ausgabe mindestens einer Muster-Signalmenge (2.1, 2.3), die einen Normal-(Muster-)zustand des zu überwachenden Bereiches beschreibt und/oder vorab registrierte charakteristische Schwingungsspektren umfaßt, sowie
- eine erste Vergleichereinheit (11) zum Vergleich der durch die zweite Signalaufbereitungseinrichtung (10) gelieferten Ist-Signalmenge (10.1) mit der aus der ersten Speichervorrichtung (2) ausgegebenen mindestens einen Muster-Signalmenge (2.1, 2.3), die eine das Vergleichsergebnis kennzeichnende Ausgangswertmenge (11.1) ausgibt, wobei der Ausgang der Vergleichereinheit (11) mit dem Eingang der Signalvorrichtung (7) verbunden ist, welche ein vom Grad der Übereinstimmung abhängiges Signal ausgibt.

2. System nach Anspruch 1, **dadurch gekennzeichnet**, daß die zweite Signalaufbereitungseinrichtung (10) eine Verarbeitungseinheit (101) zur Ausführung einer Frequenzanalyse aufweist.

3. System nach Anspruch 2, **dadurch gekennzeichnet**, daß die Signalaufbereitungseinrichtung aus einer Vorrichtung zur schnellen Fourier-Transformation besteht.

4. System nach einem der vorangehenden Ansprüche, **dadurch gekennzeichnet**, daß die zweite Signalaufbereitungseinrichtung (10) eine Einrichtung (100, 102, 103, 105, 106) zur wahlweisen Signalakkumulation mehrerer nacheinander aufgenommener Empfangssignale zwecks Verbesserung des Signal-Rausch-Verhältnisses aufweist.

5. System nach einem der Ansprüche 1 bis 4, **dadurch gekennzeichnet**, daß die erste Signalaufbereitungseinrichtung einen Generator (910) zur Erzeugung einer Modulationsspannung, Baugruppen (913 bis 917) zur Verstärkung, Demodulation und Filterung des modulierten Anteils des Empfangssignals eine, diesen Baugruppen (913 bis 917) nachgeordnete Schaltung zur selbsttätigen Verstärkungsregelung (918), eine Addierstufe (911) zum Mischen der Ausgangssignale des Generators (910) und der Schaltung zur Verstärkungsregelung (918) und einen den Baugruppen (913 bis 917) zur Verstärkung, Demodulation und Filterung vorgeschalteten Modulator (912) zur zusätzlichen Modulation des modulierten Anteils des Empfangssignals mit dem Ausgangssignal der Addierstufe (911) aufweist.

6. System nach einem der Ansprüche 4 oder 5, **dadurch gekennzeichnet**, daß die Einrichtung zur Signalakkumulation eine zweite Speichervorrichtung (102) zur Speicherung nacheinander aufgenommener, aufbereiteter Meßsignale, einen Eichsignalgeber (105) zur Lieferung eines bezüglich des Signal-Rausch-Verhältnisses als Normal dienenden, vorab gespeicherten Signals, eine Addierstufe (106) zur Akkumulation nacheinander aufgenommmener, in der zweiten Speichervorrichtung (102) gespeicherter Meßsignale, eine zweite Vergleichereinheit (103) zum Vergleich eines aufbereiteteten Meßsignals oder eines Ausgangssignals der Addierstufe (106) mit dem Eichsignal sowie eine Steuerung (100) zur Steuerung des Zusammenwirkens der zweiten Speichervorrichtung (102), des Eichsignalgebers (105), der Addierstufe (106) und der zweiten Vergleichereinheit (103) sowie der Sende-/-empfangseinrichtung (9) aufweist.

7. System nach einem der Ansprüche 1 bis 6, **dadurch gekennzeichnet**, daß die in der Speichervorrichtung (2) gespeicherte mindestens eine Muster-Signalmenge (2.1, 2.3) das Ergebnis eines in mindestens einem Normalzustand ohne Anwesenheit bekannter Lebewesen ausgeführten Meß- und Auswertungsvorganges ist.

8. System nach Anspruch 7, **dadurch gekennzeichnet**, daß das Kennsignal das charakteristische Körperschwingungsspektrum einer Person und/oder eines Tieres aufweist.

9. System nach einem der Ansprüche 1 bis 8, **dadurch gekennzeichnet**, daß die Vergleichereinheit (11) eine Einrichtung zur Verarbeitung der Ist-Signalmenge (10.1) und der mindestens einen Muster-Signalmenge (2.1, 2.3) nach einem Korrelationsverfahren aufweist.

10. System nach einem der vorangehenden Ansprüche, **dadurch gekennzeichnet**, daß die Mikrowellensende-/-empfangseinrichtung (9) für einen Frequenzbereich von im wesentlichen 1,3 bis 1,6 GHz ausgelegt ist.

11. System nach einem der vorangehenden Ansprüche, **dadurch gekennzeichnet**, daß die Antenne (23) der Mikrowellensende-/-empfangs-Einrichtung (9) eine ausgeprägte Richtcharakteristik aufweist sowie horizontal und vertikal schwenkbar ist.

12. System nach einem der vorangehenden Ansprüche, **dadurch gekennzeichnet**, daß die Einrichtungen des Systems (1) in einem Kraftfahrzeug angeordnet sind.

13. System nach einem der vorangehenden Ansprüche, **dadurch gekennzeichnet**, daß die Eliminationseinrichtung eine Kompensationsschleife (903 bis 909) aufweist, mittels der zur Kompensation des unmodulierten Empfangssignal-Anteils in Amplitude und Phase derart justierte Anteile des Sendesignals dem Empfangssignal hinzugefügt werden, daß sich der unmodulierte Anteil des Empfangssignals und der hinzugefügte Anteil des Sendesignals auslöschen, und eine Regelschleife (910 bis 918) zur Amplitudenregelung eines modulierten Empfangssignal-Anteils aufweist.

14. System nach einem der vorangehenden Ansprüche, **dadurch gekennzeichnet**, daß eine dritte Vergleichereinheit (15) zum Vergleich der aktuellen Positionskoordinaten der Mikrowellensende-/-empfangseinrichtung (9) mit vorgegebenen Koordinaten vorgesehen ist und die Mikrowellensende-/-empfangseinrichtung (9) durch ein Signal aktivierbar ist, welches von der dritten Vergleichereinheit (15) bei Übereinstimmung der Positionskoordinaten abgegeben wird.

## Claims

1. Electronic surveillance system for detecting living beings behind a wall or in a building on the basis of the reflection of a wave field beamed into the space under surveillance, with a microwave transmitting/receiving device (9) for generating and beaming the wave field and for receiving and preparing a signal reflected from the living being and an apparatus (7) for emitting a signal which indicates the presence, characterised by
- a first signal preparing device (903 to 919) provided in the microwave transmitting/receiving device (9), for eliminating the unmodulated portion of the reception signal which corresponds to the transmission signal or is already contained therein,
- a second signal preparing device (10) arranged downstream of the microwave transmitting/receiving device (9), which further prepares the microwave signal reflected from the area under surveillance, modulated by the physical vibrations of a living being present in the area, and prepared by the first signal preparing device (903 to 919), carrying out a frequency and/or correlation analysis in order to yield an actual signal quantity (10.1),
- a first memory device (2) for storing and emitting at least one sample signal quantity (2.1, 2.3) which describes a normal (sample) state of the area under surveillance and/or comprises previously recorded characteristic spectra of vibrations, and
- a first comparator unit (11) for comparing the actual signal quantity (10.1) delivered by the second signal preparing device (10) with the or each sample signal quantity (2.1, 2.3) emitted from the first memory device (2), which provides an output quantity (11.1) characterising the results of the comparison, the output of the comparator unit (11) being connected to the input of the signal device (7) which emits a signal depending on the degree of similarity.

2. System according to claim 1, characterised in that the second signal preparing device (10) has a processor unit (101) for carrying out frequency analysis.

3. System according to claim 2, characterised in that the signal preparing device consists of an apparatus for fast Fourier transformation.

4. System according to one of the preceding claims, characterised in that the second signal preparing device (10) comprises a device (100, 102, 103, 105, 106) for selective signal accumulation of a plurality of reception signals recorded one after the other in order to improve the signal-to-noise ratio.

5. System according to one of claims 1 to 4, characterised in that the first signal preparing device comprises a generator (910) for generating a modulation voltage, assemblies (913 to 917) for amplifying, demodulating and filtering the modulated part of the reception signal, a circuit mounted downstream of these assemblies (913 to 917) for automatically regulating the amplification (918), an adding stage (911) for mixing the output signals from the generator (910) and the circuit for regulating the amplification (918) and a modulator (912) provided upstream of the assemblies (913 to 917) for amplification, demodulation and filtering, said modulator (912) being provided for additional modulation of the modulated part of the reception signal with the output signal from the adding stage (911).

6. System according to one of claims 4 and 5, characterised in that the device for accumulating signals has a second memory device (102) for storing prepared measuring signals recorded one after another, a signal calibrator (105) for delivering a previously stored signal acting as the norm with regard to the signal-to-noise ratio, an adding stage (106) for accumulating measuring signals recorded one after another and stored in the second memory device (102), a second comparator unit (103) for comparing a prepared measuring signal or an output signal from the adding stage (106) with the calibrating signal and control means (100) for control the interaction of the second memory device (102), the signal calibrator (105), the adding stage (106) and the second comparator unit (103) as well as the transmitting/receiving device (9).

7. System according to one of claims 1 to 6, characterised in that the at least one sample signal quantity (2.1, 2.3) stored in the memory device (2) is the result of a measuring and evaluation process carried out in at least one normal state without any living beings known to be present.

8. System according to claim 7, characterised in that the characteristic signal contains the characteristic body vibration spectrum of a person and/or animal.

9. System according to one of claims 1 to 8, characterised in that the comparator unit (11) comprises a device for processing the actual signal quantity (10.1) and the at least one sample signal quantity (2.1, 2.3) according to a correlation procedure.

10. System according to one of the preceding claims, characterised in that the microwave transmitting/receiving device (9) is designed for a frequency range of essentially 1.3 to 1.6 GHz.

11. System according to one of the preceding claims, characterised in that the antenna (23) of the microwave transmitting/receiving device (9) has a marked directional characteristic and is horizontally and vertically pivotable.

12. System according to one of the preceding claims, characterised in that the equipment of the system (1) is mounted in a motor vehicle.

13. System according to one of the preceding claims, characterised in that the eliminating device comprises a compensation loop (903 to 909) by means of which, in order to compensate for the unmodulated reception signal portion, parts of the transmission signal are added to the reception signal, having been adjusted in amplitude and phase so that the unmodulated part of the reception signal and the added part of the transmission signal cancel each other out, and comprises a regulating loop (910 to 918) for regulating the amplitude of a modulated part of the reception signal.

14. System according to one of the preceding claims, characterised in that a third comparator unit (15) is provided for comparing the actual positional coordinates of the microwave transmitting/receiving device (9) with given coordinates, and the microwave transmitting/receiving device (9) can be activated by a signal which is emitted by the third comparator unit (15) when the positional coordinates correspond.

## Revendications

1. Dispositif électronique de surveillance en vue de la détection d'êtres vivants derrière une paroi ou dans un bâtiment par suite de la réflexion d'un champ électromagnétique rayonné dans l'espace à surveiller, équipé d'un dispositif émetteur/récepteur de micro-ondes (9) en vue de la génération et du rayonnement du champ électromagnétique ou en vue de la réception et du traitement d'un signal réfléchi par l'être vivant et d'un dispositif (7) en vue de la délivrance d'un signal indiquant la présence, caractérisé par
- un premier dispositif de traitement de signal (903 à 919) prévu dans le dispositif d'émission/réception de micro-ondes (9), en vue de l'élimination dans le signal de réception de la composante non modulée correspondant au signal d'émission ou déjà contenue dans celui-ci,
- un deuxième dispositif de traitement de signal (10) disposé en aval du dispositif d'émission/réception de micro-ondes (9), qui traite à nouveau le signal de micro-ondes réfléchi par la zone surveillée, en présence d'un être vivant dans la zone, modulé par les oscillations corporelles de celui-ci, et traité par le premier dispositif de traitement de signal (903 à 919), par réalisation d'une analyse en fréquence et/ou de corrélation en vue de la délivrance d'une grandeur de signal réel (10.1),
- un premier dispositif de mémoire (2) en vue de la mémorisation et de la délivrance d'au moins une grandeur de signal de consigne (2.1, 2.3), qui décrit un état normal (de consigne) de la zone à surveiller et/ou comprend des spectres d'oscillations caractéristiques enregistrés par avance, ainsi que
- un premier comparateur (11) en vue de la comparaison de la grandeur de signal réel (10.1) délivré par le second dispositif de traitement de signal (10) avec au moins une grandeur de signal de consigne (2.1, 2.3) délivré par le premier dispositif de mémoire (2), qui délivre une grandeur de valeur de sortie (11.1) caractérisant le résultat de la comparaison, la sortie du comparateur (11) étant reliée à l'entrée du dispositif de signal (7), qui délivre un signal fonction du degré de la coïncidence.

2. Système selon la revendication 1, caractérisé en ce que le second dispositif de traitement de signal (10) comporte une unité de traitement (101) en vue de la réalisation d'une analyse en fréquence.

3. Système selon la revendication 2, caractérisé en ce que le dispositif de traitement de signal se compose d'un dispositif en vue de la transformation de Fourier rapide.

4. Système selon l'une quelconque des revendications précédentes, caractérisé en ce que le second dispositif de traitement de signal (10) comporte un dispositif (100, 102, 103, 105, 106) en vue de l'accumulation sélective de signaux de plusieurs signaux de réception reçus successivement dans le but de l'amélioration du rapport signal-bruit.

5. Système selon l'une quelconque des revendications 1 à 4, caractérisé en ce que le premier dispositif de traitement de signal comporte un générateur (910) en vue de la génération d'une tension de modulation, des éléments (913 à 917) en vue de l'amplification, de la démodulation et du filtrage de la composante modulée du signal de réception, un circuit disposé en aval de ces éléments (913 à 917) en vue de la régulation automatique d'amplification (918), un étage d'addition (911) en vue du mélange des signaux de sortie du générateur (910) et du circuit de régulation d'amplification (918) et un modulateur (912) disposé en amont des éléments (913 à 917) en vue de l'amplification, de la démodulation et du filtrage en vue de la modulation supplémentaire de la composante modulée du signal de réception avec le signal de sortie de l'étage d'addition (911).

6. Système selon l'une quelconque des revendications 4 ou 5, caractérisé en ce que le dispositif d'accumulation de signaux comporte un second dispositif de mémoire (112) en vue de la mémorisation de signaux de mesure traités, reçus en succession, un générateur de signaux d'étalonnage (105) en vue de la délivrance d'un signal préalablement mémorisé, servant de normale par rapport au rapport signal-bruit, un étage d'addition (106) en vue de l'accumulation de signaux de mesure reçus en succession, mémorisé dans le second dispositif de mémoire (102), un second comparateur (103) afin de comparer un signal de mesure traiter ou un signal de sortie de l'étage d'addition (106) avec le signal d'étalonnage ainsi qu'une commande (100) en vue de la commande de la coopération du second dispositif de mémoire (102), du générateur de signaux d'étalonnage (105), de l'étage d'addition (106) et du second comparateur (103) ainsi que du dispositif d'émission/réception (9).

7. Système selon l'une quelconque des revendications 1 à 6, caractérisé en ce qu'au moins une grandeur de signal de consigne (2.1, 2.3) mémorisée dans le dispositif de mémoire (2) est le résultat d'un processus de mesure et d'évaluation effectué au moins dans un état normal sans présence d'êtres vivants connus.

8. Système selon la revendication 7, caractérisé en ce que le signal de reconnaissance comporte le spectre d'oscillations corporelles caractéristique d'une personne et/ou d'un animal.

9. Système selon l'une quelconque des revendications 1 à 8, caractérisé en ce que le comparateur (11) comporte un dispositif de traitement de la grandeur de signal réel (10.1) et d'au moins une grandeur de signal de consigne (2.1, 2.3) selon un procédé de corrélation.

10. Système selon l'une quelconque des revendications précédentes, caractérisé en ce que le dispositif d'émission/réception de micro-ondes (9) est dimensionné pour une plage de fréquences de sensiblement 1,3 à 1,6 GHz.

11. Système selon l'une quelconque des revendications précédentes, caractérisé en ce que l'antenne (23) du dispositif d'émission/réception de micro-ondes (9) présente un diagramme directionnel prononcé et peut pivoter horizontalement et verticalement.

12. Système selon l'une quelconque des revendications précédentes, caractérisé en ce que les dispositifs du système (1) sont disposés dans un véhicule.

13. Système selon l'une quelconque des revendications précédentes, caractérisé en ce que le dispositif d'élimination comporte une boucle de compensation (903 à 909), au moyen de laquelle, en vue de la compensation de la composante de signal de réception non modulée en amplitude et en phase de telle sorte que des composantes ajustées du signal d'émission sont ajoutées au signal de réception, en ce que la composante non modulée du signal de réception et la composante ajoutée du signal d'émission sont supprimées, et une boucle de régulation (910 à 918) en vue de la régulation d'amplitude d'une composante du signal de réception modulée.

14. Système selon l'une quelconque des revendications précédentes, caractérisé en ce qu'un troisième comparateur (15) est prévu en vue de la comparaison des coordonnées de position réelles du dispositif d'émission/réception de micro-ondes (9) avec des coordonnées prédéterminées et le dispositif d'émission/réception de micro-ondes (9) peut être activé par un signal, qui est délivré par le troisième comparateur (15) lors de la concordance des coordonnées de position.
